# EUROPEAN PATENT SPECIFICATION

(11) **EP 2 955 560 B1**
(45) Date of publication and mention of the grant of the patent: **13.03.2019**
(21) Application number: 14425071.9
(22) Date of filing: 12.06.2014
(51) Int. Cl.: G02B 23/08

(54) **Periscope**
Periskop
Périscope

(43) Date of publication of application: 16.12.2015
(73) Proprietor: ISOCLIMA S.p.A., 35042 Este (Padova) (IT)
(72) Inventor: Bertolini, Alberto, 35042 Este (IT)
(74) Representative: Seitz, Ralf Hans Frank

(56) References cited:
- WO-A1-2010/102597
- WO-A1-2012/137003
- WO-A2-00/63745
- FR-A- 1 015 506
- US-A1- 2007 217 017
- US-A1- 2010 202 036

## Description

The present invention refers to a periscope which comprises an object window, a first reflector, a second reflector, and a viewing window, wherein light entering the object window travels along an optical path from the object window via the first reflector and the second reflector to the viewing window according to the preamble of claim 1.

Periscopes are used in a number of military applications to provide the occupants of a vehicle, for instance, a tank, with a view of the outside environment. In addition to the optical view from the periscope, additional information or views have to be provided to the user, for instance, from cameras providing a night vision or thermal imaging and other information like coordinates or physical units like speed, temperature etc.

US 2007/0217017 A1 describes a head mount apparatus that includes a display section.

WO 00/63745 A2 shows a transflective display device that comprises an illumination device and a switchable mirror arranged between the illumination device and an electro-optical material that is a liquid crystal cell wherein the mirror is switchable between a transparent state and a state reflecting light.

US 2010/0202036 A1 describes a periscope that is switchable between the normal optical view of the outside, a display view, and an overlay view in which the outside view and the display view are combined. The switching element is an electronically switchable mirror. The display is arranged outside of the environment light entered into the periscope. The display is a LCD or an OLED.

WO 1202/137003 A1 describes a known periscope with a second reflector which is selectively moveable between a first position of use, in which the second reflector reflects light from a first reflector towards a viewing window of the periscope, and a second position of use in which the second reflector reflects light from a display delivering additional information towards the viewing window. Accordingly, the users view can be switched between an optical view from the outside environment of the periscope through the object window to the eyes of the user, and an electronically generated view delivering additional information from an electronic display by mechanical movement of the second reflector in the periscope. This mechanical switching means a voluminous and complex design of the periscope.
Thus, the object of the present invention is, inter alia, to provide a design of the periscope with enhanced compactness.

This object is solved by the periscope of the invention of claim 1. Accordingly, the periscope of the invention comprises at least an object window, a first reflector, a second reflector, and a viewing window, wherein light entering the object window travels along an optical path from the object window via the first reflector and the second reflector to the viewing window, wherein at least one optically transparent electronic display is arranged in the optical path of the light in the periscope.

By using a completely optically transparent electronic display in the optical path, the problem of mechanical position switching of a reflector in the periscope is no longer required, and, thus, the periscope of the invention facilitates a high compactness of the periscope with less mechanical complexity. Further, for instance, regarding a tank, an operator drives the tank by using one or more conventional periscopes. Then the operator's field of vision is limited to the outside environment which can be seen through the periscope. If the operator has to watch a control panel on a dashboard, then the operator has to look away from the periscope to the control panel, and, thus, in this moment, he cannot watch the outside environment shown in the conventional periscope which would reduce the driving safety. The periscope of the invention avoids this safety problem by using an optically transparent electronic display in the optical path of the periscope so that the operator can see enough of the outside environment to be able to drive the tank and in addition information, for instance, from the control board, which is indicated by the electronic display at the same time viewable in superposition on the viewing window of the periscope of the invention in case this additional information is needed. Consequently, the periscope of the invention helps to improve the driving safety of a tank or of another vehicle using a periscope. Otherwise, if the transparent display is in an off mode, it does neither reduce nor interfere the vision field of the periscope due to its complete transparency.

It should be understood that the object window and/or the viewing window of the periscope of the invention may simply be apertures in a housing of the periscope and do not necessary include transparent material, such as glass or plastics. Further, the object window may be provided by the face of a prism, which forms a reflector.

The optically transparent electronic display may be arranged on the object window, in a position of the object window or in a position on the viewing window or in the position of the viewing window to allow a quick and easy exchange of the electronic display in case of its malfunction. Further, the object window may consist of the optically transparent electronic display or the viewing window may consist of the optically transparent electronic display in order to have an integrated unit or box to be installed.

In the periscope of the invention, the optically transparent electronic display may be arranged on the first reflector, in a position of the first reflector or in angled position to the first reflector, or on the second reflector, in a position of the second reflector or in an angled position to the second reflector.

The transparent electronic display may be arranged anywhere in the optical path of the periscope which, for instance, includes also positions and locations corresponding to a central line of the optical path or to any offset position from the central line of the optical path. Further, the transparent optical display may have any dimensions only limited by the whole cross section of the periscope. The display may only occupy a part of the area of the object window, the viewing window, the first reflector, the second reflector, or of the whole cross section of the periscope which is seen normally to the optical path.

The first reflector may be any suitable component with a reflective surface, a mirror or a prism and also the second reflector may be any suitable component with a reflective surface, for instance, a mirror or a prism.

The optically transparent electronic display used in the periscope of the invention may be a fully optically transparent electroluminescent thin film electronic display which may comprise a fully optically transparent substrate and a fully optically transparent thin film electroluminescent device arranged on the substrate in order to ensure the optically transparency of the electronic display and compactness of periscope. Preferably, the optically transparent electronic display is a TASEL (transparent thin film electroluminescence) display which may comprise an optically transparent substrate of glass. The TASEL display is a completely transparent display that can be viewed from two sides.

The first reflector or the second reflector of the periscope may comprise an optically transparent substrate of glass with a first surface and a second surface, an optically transparent thin film electroluminescent device arranged on the second surface or front surface and covering at least a part of the second surface, and a reflecting mirror layer deposited on substantially the whole first surface or rear surface of the glass substrate in order to provide an integrated TASEL reflector of the periscope.

The first reflector or the second reflector may comprise an optically transparent glass pane with a first surface and a second surface, an optically transparent electronic display which has an optically transparent substrate of glass with a first surface and a second surface and a thin film electroluminescent device arranged on the second surface of the substrate and covering at least a part of the second surface, an intermediate adhesive layer arranged between the second surface of the glass pane and the first surface of the substrate of the optically transparent electronic display for fixing the display on the glass pane and a reflecting mirror layer deposited on substantially the whole first surface of the glass pane in order to provide an integrated unit to be easily installed in or on the periscope.

The first reflector or the second reflector may be a glass mirror on which the optically transparent electronic display is arranged by means of an adhesive layer. The adhesive layer may be of polyvinylbutyral (PVB), a PVB foil, a PU (polyurethane) foil or EVA (ethylene-vinyl acetate) or any kind of cast resin as acrylic or epoxy resin.

The fully optically transparent electronic display, for instance, the TASEL display, may also be arranged separately, distant to the windows and reflectors, anywhere in the optical light path of the periscope, but particularly in the vertical portion of the optical light path, i.e. between the first reflector and the second reflector of the periscope of the invention. Then, the housing may be divided in an upper housing portion and a lower housing portion which are formed for fixing and installing the electronic display. Particularly, the housing portions may form a rebate or have corresponding flanges for installing and fixing the electronic display. The housing of the periscope of the invention may be formed as a massive block of optically transparent plastic material or glass forming the body of the periscope. In this case the block may be divided into two parts to install and fix the optically transparent electronic display.

The periscope may comprise a display controller electrically coupled to the optically transparent electronic display for controlling its display function. Further, the periscope of the invention may comprise a switch for switching on and off the optically transparent electronic display.

The periscope of the invention may also be used and installed in a tank turret to show additional information. For instance, the operator of a tank cannon or machine-gun could use additional information indicated by the electronic display or TASEL display of the periscope to check where he is shooting. Accordingly, the optically transparent electronic display may show additional information about the shooting, particularly about the precision of the shooting or additional information about the quantity of ammunition still available.

Further advantageous and preferred embodiments are mentioned in the dependent claims. Additional objects and advantages, and features of the invention could be derived from the following detailed description and drawings of exemplified and preferred embodiments of the invention, in which:
- Fig. 1: is a schematic sectional view of a periscope according to a preferred embodiment of the invention;
- Fig. 2: is a schematic partial sectional view of a reflector with an optically transparent electronic display to be used as first or second reflector in the embodiment of Fig. 1;
- Fig. 3: is a further schematic partial sectional view of the structure of an alternative reflector with an optically transparent electronic display to be used as first reflector or second reflector in the embodiment of Fig. 1;
- Fig. 4: is a schematic partial sectional view of a window with an optically transparent electronic display to be used as object window or viewing window in alternative embodiments of the invention;
- Fig. 5: is a schematic partial sectional view of a window with an optically transparent electronic display to be used as object window or viewing window in alternative embodiments of the invention;
- Fig. 6: is a schematic partial sectional view of a reflector with an optically transparent electronic display to be used as first or second reflector in alternative embodiments of the invention;
- Fig. 7: is a schematic partial sectional view of a window with an optically transparent electronic display to be used as object window or viewing window in alternative embodiments of the invention; and
- Fig. 8: is a schematic partial sectional view of a further embodiment of the periscope of the invention using a separate electronic display in the optical path.

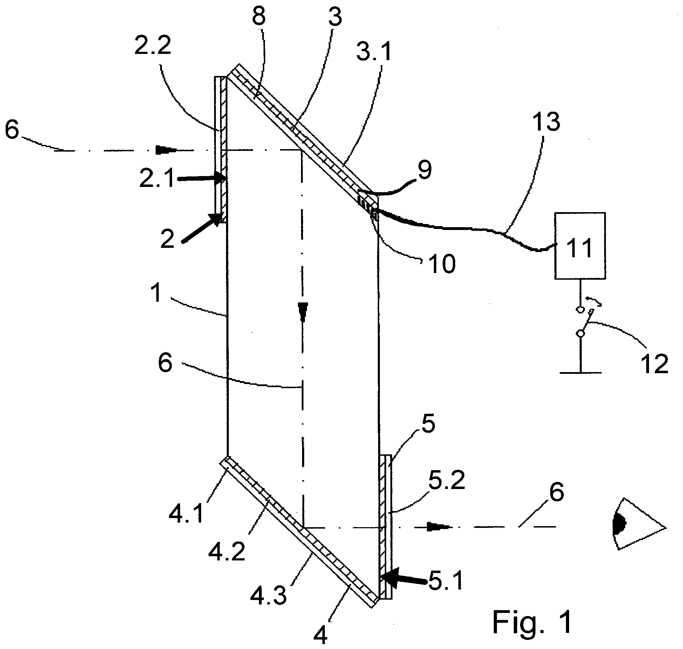

Fig. 1 shows a periscope according to a preferred embodiment of the invention. The periscope comprises an object window 2, a first reflector 3, a second reflector 4, and a viewing window 5, which are arranged and installed in a housing 1 of the periscope. Light from the outside environment of the periscope enters the periscope via the object window 2. The first reflector 3 is arranged to reflect light from the object window 2 towards the second reflector 4, which reflects light from the first reflector 3 towards the viewing window 5. Finally the light from the viewing window 5 reaches the user watching the viewing window 5. Accordingly, the light from the outside environment caught by the periscope via the object window 2 travels along an optical path 6 from the object window 2 via the first reflector 3 and the second reflector 4 to the viewing window 5. Thus, the optical path 6 of the light extends in horizontal direction between the object window 2 and the first reflector 3. The optical path 6 of the light reflected and deflected by the first reflector 3 extends along a vertical direction between the first reflector 3 and the second reflector 4. Finally, the light reflected and deflected from the second reflector 4 travels again along the horizontal direction of the optical path 6 to the viewing window 5. The broken line in Fig. 1 only shows schematically a central line of the optical path 6 which, of course, extends within the whole cross sections of the object window 2.8, the housing 1.8 or body, and the viewing window 5.8.

The object window 2 comprises a pane of transparent glass 2.2 with high transmission of light which covers completely a corresponding opening 2.1 or aperture of the housing 1. The object window 2 is fixed to the housing 1 of the periscope of the invention by means of glue or adhesive.

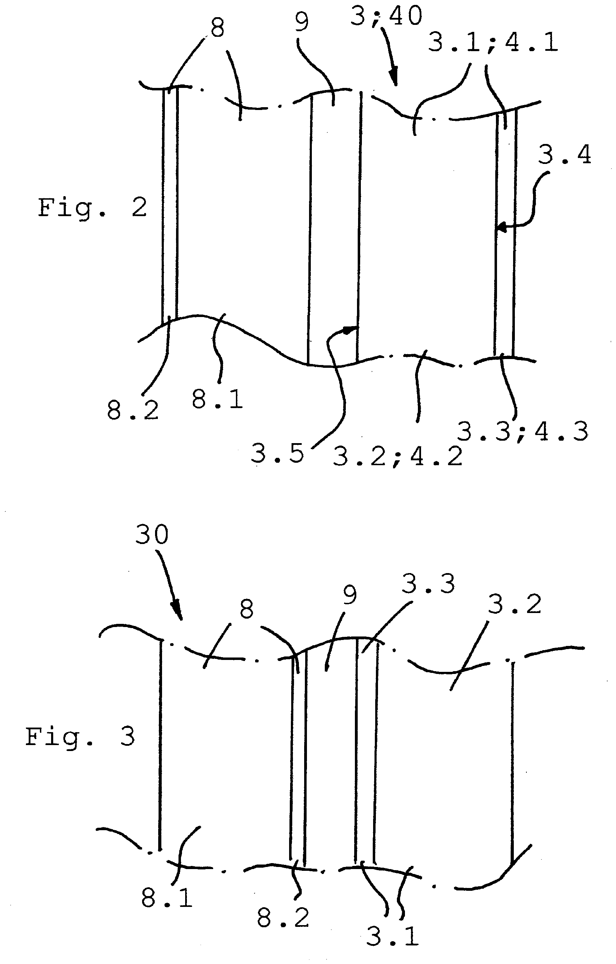

As shown in Fig. 2 in more detail, the first reflector 3 is realized as a mirror 3.1 which comprises a mirror pane 3.2, for instance, of glass and a reflecting layer 3.3 made of, for instance, aluminum covering a complete back surface 3.4 of the mirror glass pane 3.2 for reflecting light reaching a front surface 3.5 of the reflecting mirror 3.1. An angle between the glass pane 2.2 of the object window 2 and the mirror 3.1 is approximately 45° to deflect the light from the horizontal direction into the vertical direction by 90° downwards along the optical path 6 to the second reflector 4. This angle may, however, be changed in order to have a different vision field.

On the front surface 3.5 of the mirror 3.1 of the first reflector 3 a completely optically transparent electronic display 8 is arranged by means of a transparent layer 9 of adhesive or glue.

The optically transparent electronic display 8 is a completely optically transparent thin film electroluminescent display, for instance, a TASEL display, which comprises a fully optically transparent glass substrate 8.1 and a completely optically transparent thin film electroluminescent layered device 8.2 that comprises a layer of transparent column electrodes arranged on the glass substrate 8.2, a transparent electroluminescent phosphor layer arranged between optically transparent dielectric layers and optically transparent row electrodes extending normal to the column electrodes. The transparent thin film layers of the thin film electroluminescent layered device 8.2 may be produced by using atomic layer deposition on the transparent substrate 8.1. The transparent row and column electrode layers may be arranged in a matrix structure and may be made of indium tin oxide.

If an electrical voltage is applied between a row electrode and a column electrode, a pixel of the phosphor layer is energized to emit light by energizing the electrodes in a controlled manner. Information corresponding to energized pixel pattern could be displayed for instance in yellow color. Thus, the light generated by the electronic display 8 is the light corresponding to the information displayed. At least a part of the light emitted by the electronic display 8 travels along the optical path 6 to the second reflector 4, where it is reflected to the viewing window 5 to reach the eyes of the user. Thus, if the electronic display 8 is energized or switched on (on mode), the user can see additional information displayed on the electronic display 8 in addition to the outside environment light through the viewing window 5.

In contrast, if there is no electrical voltage applied on the electrodes of the electronic display 8, which means that the electrodes and, thus, the electronic display 8 is not energized and is switched off (off mode), no light is generated and emitted from the electronic display 8 and, consequently, no additional information can be seen by the user through the viewing window 5. Since the electronic display 8 is completely optically transparent, the light from the outside environment of the periscope is reflected by the mirror 3.1 of the first reflector 3 through the transparent adhesive layer 9 and the optically transparent electronic display 8 vertically downward towards the second reflector 4 without any additional information displayed by the electronic display 8 and without missing portions in the vision field image due to complete transparency of the electronic display 8.

A thickness of the transparent thin film electroluminescent layered device 8.2 may be ca. 1 pm. A thickness of the glass substrate 8.1 may amount to ca. 1 mm. The adhesive layer 9 may be 0.75 mm thick and the mirror glass pane 3.2 may have a thickness in the range between 1 mm and 4 mm. The reflecting layer 3.3 may be 0.1 mm thick.

The second reflector 4 is a mirror 3.1 as shown in Fig. 2 comprising a glass pane 3.2 with a reflecting layer 3.3, for instance, of aluminum arranged on its back side for reflecting the light from the vertical direction into the horizontal direction towards the viewing window 5. The viewing window 5 comprises an optically transparent glass pane 5.2 covering a corresponding opening 5.1 or aperture of the housing 1 of the periscope. The glass pane 5.2 is again fixed on the housing 1 by adhesive or glue.

Further, the periscope may comprise an electronic display controller 11 which is coupled to a connector 10, which is fixed on the electronic display 8 and coupled to the electrodes, via a suitable wiring 13 or cable in order to control the electronic display 8. The periscope of Fig. 1 may comprise an electrical switch 12 that is coupled to the display controller 11 and which can be operated by the user to switch on the electronic display 8 via the display controller 11 in order display the prescribed information or additional light pattern, or to switch off the electronic display 8 to use the light from the outside environment of the periscope over the complete viewable area of the viewing window 5. The display controller 11 may be a software supported microprocessor system comprising a display RAM to load and store the display pattern to be displayed by the electronic display 8. If the switch 12 is closed in the on mode the electronic display 8 is energized with the display pattern from the display controller 11, and then, the user can see the additional display information or display pattern at the viewing window 5 together with a substantial part of the outside environment view detected by the periscope. If the switch 12 is opened in the off mode the electronic display 8 is not energized, and, then, the user can only see the full outside environment view. The switch 12 may also be realized as internal switching function within the display controller 11 wherein the switching function may be triggered automatically depending by an external or internal event.

As shown in Fig. 1 and Fig. 2, the light entering the periscope at the object window 2 and travelling along the optical path 6 to the viewing window 5 passes through or is reflected at the units of the periscope in the following sequence, wherein the electronic display 8 is arranged on the first reflector 3:
Glass pane 2.2 of object window 2 - optically transparent electroluminescent thin film layered device 8.2 and then glass pane substrate 8.1 of TASEL transparent electronic display 8 arranged on first reflector 3 - optically transparent adhesive layer 9 - mirror glass pane 3.2 and then reflected at reflecting layer 3.3 of mirror of first reflector 3 to second reflector 4 - mirror glass pane 4.2 and then reflected at reflecting layer 4.3 of mirror 4.1 of second reflector 4 to viewing window 5 - glass pane 5.2 of viewing window 5.

In an alternative embodiment of the invention shown in Fig. 1 in connection with Fig. 3, the light entering the periscope at the object window 2 and travelling along the optical path 6 to the viewing window 5 passes through or is reflected at the units of the periscope in the following sequence, wherein the electronic display 8 is arranged on the first reflector 3: Glass pane 2.2 of object window 2 - glass pane substrate 8.1 and then optically transparent electroluminescent thin film layered device 8.2 of TASEL transparent electronic display 8 arranged on first reflector 3 - optically transparent adhesive layer 9 - reflected at reflecting layer 3.3 on mirror glass pane 3.2 of mirror 3.1 of first reflector 30 to second reflector 4 - mirror glass pane 4.2 and then reflected at reflecting layer 4.3 of mirror 4.1 of second reflector 4 to viewing window 5 - glass pane 5.2 of viewing window 5.

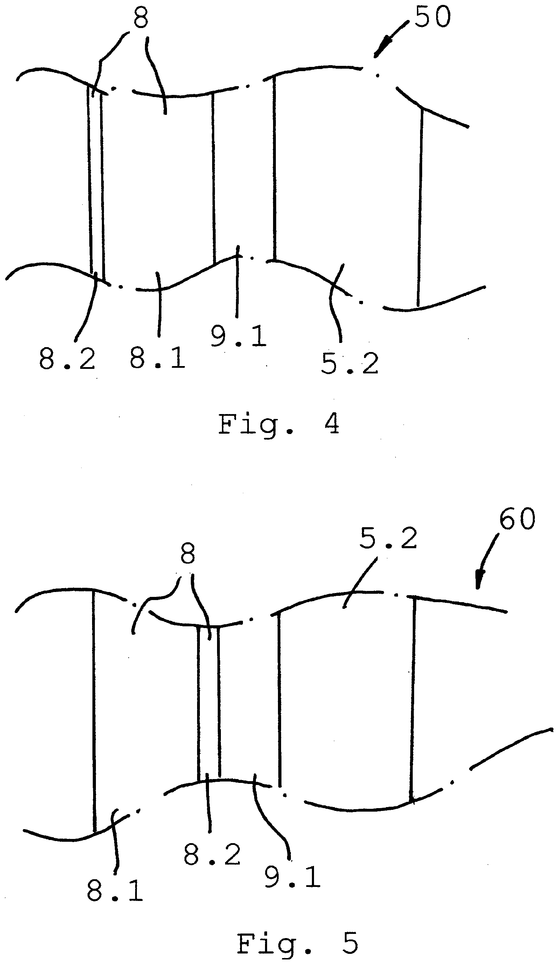

A further alternative embodiment of the periscope of the invention in connection with Fig. 4 uses the electronic display 8 arranged on an viewing window 50 instead on the first reflector 3 as shown in Fig. 1, wherein the light entering the periscope at the object window 2 and travelling along the optical path 6 to the viewing window 50 passes through or is reflected at the units of the periscope in the following sequence:
Glass pane 2.2 of object window 2 - reflected at reflecting layer 3.3 on mirror glass pane 3.2 of mirror 3.1 of first reflector 3 to second reflector 4 - mirror glass pane 4.2 and then reflected at reflecting layer 4.3 of mirror 4.1 of second reflector 4 to viewing window 50 - optically transparent electroluminescent thin film layered device 8.2 and then glass pane substrate 8.1 of TASEL transparent electronic display 8 arranged on viewing window 50 - optically transparent adhesive layer 9.1 - glass pane 5.2 of viewing window 50.

A further alternative embodiment of the invention in connection with Fig. 5 uses the electronic display 8 arranged on an viewing window 60 instead on the first reflector 3 as shown in Fig. 1, wherein the light entering the periscope at the object window 2 and travelling along the optical path 6 to the viewing window 60 passes through or is reflected at the units of the periscope in the following sequence:
Glass pane 2.2 of object window 2 - reflected at reflecting layer 3.3 on mirror glass pane 3.2 of mirror 3.1 of first reflector 3 to second reflector 4 - mirror glass pane 4.2 and then reflected at reflecting layer 4.3 of mirror 4.1 of second reflector 4 to viewing window 60 - glass pane substrate 8.1 and then optically transparent electroluminescent thin film layered device 8.2 of TASEL transparent electronic display 8 arranged on viewing window 60 - optically transparent adhesive layer 9.1 - glass pane 5.2 of viewing window 60.

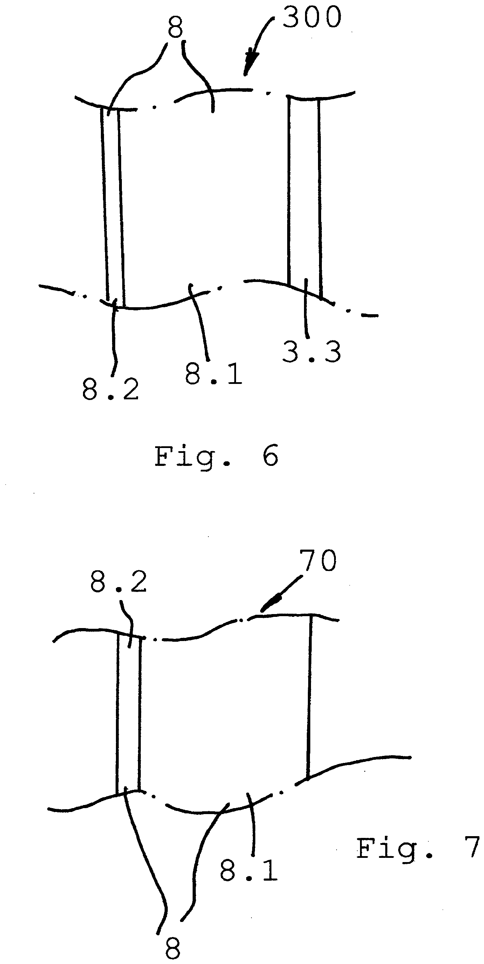

A yet further alternative embodiment of the invention in connection with Fig. 7 uses only the electronic display 8 as viewing window 70, wherein the light entering the periscope at the object window 2 and travelling along the optical path 6 to the viewing window 70 passes through or is reflected at the units of the periscope in the following sequence:
Glass pane 2.2 of object window 2 - reflected at reflecting layer 3.3 on mirror glass pane 3.2 of mirror 3.1 of first reflector 3 to second reflector 4 - mirror glass pane 4.2 and then reflected at reflecting layer 4.3 of mirror 4.1 of second reflector 4 to viewing window 70 - optically transparent electroluminescent thin film layered device 8.2 and then glass pane substrate 8.1 of TASEL transparent electronic display 8 used as viewing window 70.

An alternative embodiment of the periscope of the invention uses the first reflector 300 of Fig. 6, wherein the light entering the periscope at the object window 2 and travelling along the optical path 6 to the viewing window 5 passes through or is reflected at the units of the periscope in the following sequence:
Glass pane 2.2 of object window 2 - optically transparent electroluminescent thin film layered device 8.2 and then glass pane substrate 8.1 of TASEL transparent electronic display 8 - reflected at reflecting layer 3.3 of first reflector 300, wherein the reflecting layer 3.3, for instance, made of aluminum, is deposited directly on a backside of glass pane substrate 8.1 of electronic display 8, to second reflector 4 - mirror glass pane 4.2 and then reflected at reflecting layer 4.3 of mirror 4.1 of second reflector 4 to viewing window 5 - glass pane 5.2 of viewing window 5.

A further alternative embodiment of the invention in connection with Fig. 5 uses the electronic display 8 only arranged on an object window 20, wherein the light entering the periscope at the object window 20 and travelling along the optical path 6 to the viewing window 5 passes through or is reflected at the units of the periscope in the following sequence:
glass pane substrate 8.1 and then optically transparent electroluminescent thin film layered device 8.2 of TASEL transparent electronic display 8 arranged on object window 20 - optically transparent adhesive layer 9.1 - glass pane 2.2 of object window 20 - reflected at reflecting layer 3.3 on mirror glass pane 3.2 of mirror 3.1 of first reflector 3 to second reflector 4 - mirror glass pane 4.2 and then reflected at reflecting layer 4.3 of mirror 4.1 of second reflector 4 to viewing window 5 - glass pane 5.2 of viewing window 5.

A further alternative embodiment of the invention in connection with Fig. 2 uses the electronic display 8 arranged on a second reflector 40, wherein the light entering the periscope at the object window 2 and travelling along the optical path 6 to the viewing window 5 passes through or is reflected at the units of the periscope in the following sequence:
Glass pane 2.2 of object window 2 - mirror glass pane 3.2 and then reflected at reflecting layer 3.3 of mirror of first reflector 3 to second reflector 40 - optically transparent electroluminescent thin film layered device 8.2 and then glass pane substrate 8.1 of TASEL transparent electronic display 8 - optically transparent adhesive layer 9 -mirror glass pane 4.2 and then reflected at reflecting layer 4.3 of mirror 4.1 of second reflector 4 to viewing window 5 - glass pane 5.2 of viewing window 5.

The housing 1 of the periscopes shown in Fig. 1 to 7 of the periscope of the invention may be formed in alternative as a massive block of optically transparent plastic material, for instance, PMMA (polymethylmethacrylate), or glass forming a body of the periscope.

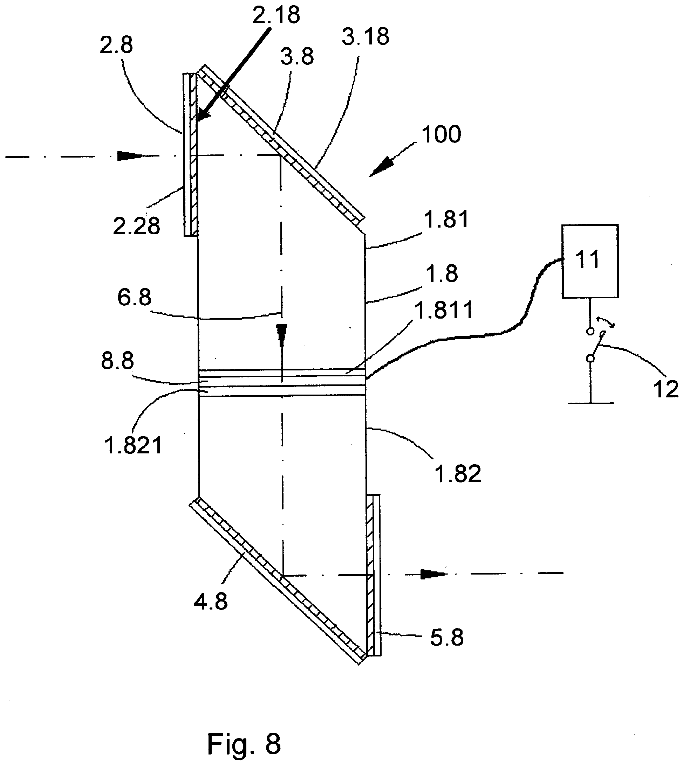

Fig. 8 shows a periscope 100 according to a further embodiment of the invention. The periscope 100 comprises an object window 2.8, a first reflector 3.8, a second reflector 4.8, and a viewing window 5.8, which are arranged and installed in or on a housing 1.8 or body of the periscope. Light from the outside environment of the periscope 100 enters the periscope via the object window 2.8. The first reflector 3.8 is arranged to reflect light from the object window 2.8 towards the second reflector 4.8, which reflects light from the first reflector 3.8 towards the viewing window 5.8. Finally the light from the viewing window 5.8 reaches the user watching the viewing window 5.8. Accordingly, the light from the outside environment caught by the periscope via the object window 2.8 travels along an optical path 6.8 from the object window 2.8 via the first reflector 3.8 and the second reflector 4.8 to the viewing window 5.8. Thus, the optical path 6.8 of the light extends in horizontal direction between the object window 2.8 and the first reflector 3.8. The optical path 6.8 of the light reflected and deflected by the first reflector 3.8 extends along a vertical direction between the first reflector 3.8 and the second reflector 4.8. Finally, the light reflected and deflected from the second reflector 4.8 travels again along the horizontal direction of the optical path 6.8 to the viewing window 5.8. The broken line in Fig. 8 only shows schematically a central line of the optical path 6.8 which, of course, extends within the whole cross sections of the object window 2.8, the housing 1.8 or body, and the viewing window 5.8.

As in Fig. 1, the object window 2.8 comprises a pane of transparent glass 2.28 with high transmission of light which covers completely a corresponding opening 2.18 or aperture of the housing 1.8. The first reflector 3.8 is realized as a mirror 3.18.

The fully optically transparent electronic display 8.8 is arranged between the first and second reflectors 3.8 and 4.8 within and normally to the vertical portion or direction of the optical path 6.8. The optically transparent electronic display 8.8 is a completely optically transparent thin film electroluminescent display, for instance, a TASEL display, which comprises a fully optically transparent glass substrate and a completely optically transparent thin film electroluminescent layered device that comprises a layer of transparent column electrodes arranged on the glass substrate, a transparent electroluminescent phosphor layer arranged between optically transparent dielectric layers and optically transparent row electrodes extending normal to the column electrodes.

If the electronic display 8.8 is energized or switched on (on mode) via the switch 12 and the display controller 11, the user can see additional information displayed on the electronic display 8.8 in addition to the outside environment light through the viewing window 5.8. In contrast, if there is no electrical voltage applied on the electrodes of the electronic display 8.8, which means that the electrodes and, thus, the electronic display 8.8 is not energized and is switched off (off mode) by the switch 12, no light is generated and emitted from the electronic display 8.8 and, consequently, no additional information can be seen by the user through the viewing window 5.8. Since the electronic display 8.8 is completely optically transparent, the light from the outside environment of the periscope 100 is reflected by the mirror 3.18 of the first reflector 3.8 and it passes through the optically transparent electronic display 8.8 vertically downward towards the second reflector 4.8 without any additional information displayed by the electronic display 8.8 and without any missing portions or disturbances in the vision field image due to complete transparency of the electronic display 8.8.

The housing 1.8 may be divided in an upper housing portion 1.81 and a lower housing portion 1.82 which are formed for holding and installing the electronic display 8.8, for instance, by corresponding flanges 1.811 and 1.821 or a rebate, if the upper and lower housing portions 1.81 and 1.82 are connected with each other. The housing 1.8 of the periscope 100 of the invention may be formed in alternative as a massive block of optically transparent plastic material, for instance, PMMA (polymethylmethacrylate), or glass forming the body of the periscope 100. In this case the block may be divided into two parts to install and fix the optically transparent electronic display 8.8 there between if the parts are connected with each other.

## Claims

1. Periscope comprising at least an object window (2), a first reflector (3), a second reflector (4), and a viewing window (5), wherein outside environment light entering the object window (2) travels along an optical path (6) from the object window (2) via the first reflector (3) and the second reflector (4) to the viewing window (5), **characterized by** at least one optically transparent electronic display (8) arranged in the optical path (6) of the outside environment light and displaying additional information in addition to the outside environment light wherein a superposition of the outside environment light with the additional information from the electronic display (8) is viewable on the viewing window (5).

2. Periscope according to claim 1, **characterized in that** the optically transparent electronic display (8) is arranged on the object window (2) or in a position of the object window (2) or on the viewing window (5) or in the position of the viewing window (5).

3. Periscope according to claim 2, **characterized in that** the object window (2) consists of the optically transparent electronic display (8) or that the viewing window (70) consists of the optically transparent electronic display (8).

4. Periscope according to claim 1, **characterized in that** the optically transparent electronic display (8) is arranged on the first reflector (3), in a position of the first reflector or in an angled position to the first reflector or on the second reflector (4), in a position of the second reflector (4) or in an angled position to the second reflector, or
that the fully optically transparent electronic display (8.8), is arranged separately, distant to the windows and reflectors, anywhere in the optical path (6.8) of the periscope(100), particularly, in a vertical portion of the optical path (6.8) between the first reflector (3.8) and the second reflector (4.8) of the periscope (100) .

## Patentansprüche

1. Periskop mit mindestens einem Gegenstandsfenster (2), einem ersten Reflektor (3), einem zweiten Reflektor (4) und einem Sichtfenster (5), wobei äußeres Umgebungslicht, das in das Gegenstandsfenster (2) eintritt, entlang eines optischen Weges (6) von dem Gegenstandsfenster (2) über den ersten Reflektor (3) und den zweiten Reflektor (4) zu dem Sichtfenster (5) fortschreitet, **gekennzeichnet durch** mindestens eine optisch transparente, elektronische Anzeige (8), die in dem optischen Weg (6) des äußeren Umgebungslichts angeordnet ist und zusätzliche Informationen zusätzlich zu dem äußeren Umgebungslicht anzeigt, wobei eine Überlagerung des äußeren Umgebungslichts mit den zusätzlichen Informationen von der elektronischen Anzeige (8) an dem Sichtfenster (5) sichtbar ist.

2. Periskop nach Anspruch 1, **dadurch gekennzeichnet, dass** die optisch transparente, elektronische Anzeige (8) an dem Gegenstandsfenster (2) oder in einer Position des Gegenstandsfensters (2) oder an dem Sichtfenster (5) oder in der Position des Sichtfensters (5) angeordnet ist.

3. Periskop nach Anspruch 2, **dadurch gekennzeichnet, dass** das Gegenstandsfenster (2) aus der optisch transparenten, elektronischen Anzeige (8) besteht oder dass das Sichtfenster (70) aus der optisch transparenten, elektronischen Anzeige (8) besteht.

4. Periskop nach Anspruch 1, **dadurch gekennzeichnet, dass** die optisch transparente, elektronische Anzeige (8) an dem ersten Reflektor (3), in einer Position des ersten Reflektors oder in einer angewinkelten Position zu dem ersten Reflektor oder an dem zweiten Reflektor (4), in einer Position des zweiten Reflektors (4) oder in einer angewinkelten Position zu dem zweiten Reflektor angeordnet ist, oder
dass die vollständig optisch transparente, elektronische Anzeige (8.8) separat mit Abstand zu den Fenstern und Reflektoren irgendwo in dem optischen Weg (6.8) des Periskops (100) angeordnet ist, insbesondere in einem vertikalen Abschnitt des optischen Weges (6.8) zwischen dem ersten Reflektor (3.8) und dem zweiten Reflektor (4.8) des Periskops (100).

## Revendications

1. Périscope comprenant au moins une fenêtre d'objet (2), un premier réflecteur (3), un second réflecteur (4) et une fenêtre de visualisation (5) ; dans lequel la lumière de l'environnement externe pénétrant dans la fenêtre d'objet (2) se propage le long d'un chemin optique (6) à partir de la fenêtre d'objet (2) via le premier réflecteur (3) et le second réflecteur (4) en direction de la fenêtre de visualisation (5), **caractérisé par** au moins un écran électronique (8) transparent du point de vue optique disposé dans le chemin optique (6) de la lumière de l'environnement externe et affichant des informations supplémentaires en plus de la lumière de l'environnement externe ; dans lequel une superposition de la lumière de l'environnement externe avec les informations supplémentaires à partir de l'écran électronique (8) peut être vue sur la fenêtre de visualisation (5).

2. Périscope selon la revendication 1, **caractérisé en ce que** l'écran électronique (8) transparent du point de vue optique est disposé sur la fenêtre d'objet (2) ou dans une position de la fenêtre d'objet (2) ou sur la fenêtre de visualisation (5) ou dans la position de la fenêtre de visualisation (5).

3. Périscope selon la revendication 2, **caractérisé en ce que** la fenêtre d'objet (2) est constituée par l'écran électronique (8) transparent du point de vue optique ou **en ce que** la fenêtre de visualisation (70) est constituée par l'écran électronique (8) transparent du point de vue optique.

4. Périscope selon la revendication 1, **caractérisé en ce que** l'écran électronique (8) transparent du point de vue optique est disposé sur le premier réflecteur (3), dans une position du premier réflecteur ou dans une position angulaire par rapport au premier réflecteur ou sur le second réflecteur (4), dans une position du second réflecteur (4) ou dans une position angulaire par rapport au second réflecteur ; ou
**en ce que** l'écran électronique (8.8) complètement transparent du point de vue optique est disposé séparément, à distance des fenêtres et des réflecteurs, à n'importe quel endroit dans le chemin optique (6.8) du périscope (100), en particulier dans une portion verticale du chemin optique (6.8) entre le premier réflecteur (3.8) et le second réflecteur (4.8) du périscope (100).
